# EUROPÄISCHE PATENTSCHRIFT

(11) **EP 2 754 236 B1**
(45) Veröffentlichungstag und Bekanntmachung des Hinweises auf die Patenterteilung: **29.04.2020**
(21) Anmeldenummer: 12758769.9
(22) Anmeldetag: 24.08.2012
(51) Int. Cl.: H02P 3/12, H02P 3/14, H02P 7/00

(54) **ANTRIEBSANORDNUNG ZUR MOTORISCHEN VERSTELLUNG EINES VERSTELLELEMENTS EINES KRAFTFAHRZEUGS**
DRIVE ASSEMBLY FOR THE MOTORIZED ADJUSTMENT OF AN POSITIIONING ELEMENT OF A MOTOR VEHICLE
DISPOSITIF DE COMMANDE POUR LE RÉGLAGE, ACTIONNÉ PAR MOTEUR, D'UN ÉLÉMENT À DÉPLACEMENT D'UN VÉHICULE À MOTEUR

(30) Priorität: 05.09.2011 DE 102011112273
(43) Veröffentlichungstag der Anmeldung: 16.07.2014
(73) Patentinhaber: Brose Fahrzeugteile SE & Co. Kommanditgesellschaft, Bamberg, 96052 Bambert (DE)
(72) Erfinder: NAGLER, Toni, 96049 Bamberg (DE)
(74) Vertreter: Gottschald, Jan
(86) Internationale Anmeldenummer: PCT/EP2012/003579
(87) Internationale Veröffentlichungsnummer: WO 2013/034253

(56) Entgegenhaltungen:
- EP-A2- 1 783 309
- WO-A1-2006/133689
- WO-A1-2010/083999
- DE-A1-102004 052 590
- DE-B3-102005 028 058
- JP-A- 2011 032 665
- US-A1- 2005 062 453

## Beschreibung

Die Erfindung betrifft eine Antriebsanordnung zur motorischen Verstellung eines Verstellelements eines Kraftfahrzeugs gemäß dem Oberbegriff von Anspruch 1 sowie eine Verstellelementanordnung eines Kraftfahrzeugs gemäß Anspruch 15.

Der Begriff "Verstellelement" ist vorliegend umfassend zu verstehen. Hierunter fallen Heckklappen, Heckdeckel, Motorhauben, Türen, insbesondere Seitentüren, Laderaumböden o. dgl. eines Kraftfahrzeugs.

In erster Linie findet die in Rede stehende Antriebsanordnung allerdings Anwendung bei Heckklappen und Seitentüren in Kraftfahrzeugen. Sie dient der motorischen Verstellung des jeweiligen Verstellelements in Schließrichtung und in Öffnungsrichtung. Wichtig ist dabei regelmäßig, dass die Antriebsanordnung neben dem motorischen Verstellbetrieb auch einen manuellen Verstellbetrieb zulässt. Der manuelle Verstellbetrieb ist insbesondere im Notfall, beispielsweise im Crashfall oder bei Stromausfall, von Bedeutung.

Eine bekannte Antriebsanordnung (DE 20 2005 007 155 U1) ist einer Heckklappe zugeordnet. Die Antriebsanordnung ist mit zwei Spindelantrieben ausgestattet, die jeweils mit einer kompakten Baueinheit einen Antriebsmotor, ein Zwischengetriebe mit Kupplung und ein Spindel-Spindelmutter-Getriebe aufweisen. In der jeweiligen Baueinheit ist eine Federanordnung vorgesehen, die der Gewichtskraft der zugeordneten Heckklappe entgegenwirkt. Die Antriebsanordnung weist ferner eine Antriebssteuerung auf, die der Ansteuerung der beiden Antriebe, insbesondere der beiden Antriebsmotoren, dient. Die Antriebe sind nicht selbsthemmend ausgestattet, so dass ein manueller Betrieb auf einfache Weise realisiert ist.

Mit der beschriebenen Antriebsanordnung lassen sich Heckklappen von beträchtlicher Größe und/oder beträchtlichem Gewicht motorisch verstellen. Dies eröffnet neue Freiheitsgrade bei der Auslegung solcher Heckklappen. Mit der Steigerung des Gewichts ist grundsätzlich aber auch ein erhöhtes Risiko bei einem Ausfall von Antriebskomponenten verbunden. Beispielsweise muss bei einem Bruch der obigen Federanordnung dafür gesorgt werden, dass die Heckklappe nicht ungebremst gravitationsbedingt in Schließrichtung fällt.

Bei der bekannten Antriebsanordnung (WO 2010/083999 A1), von der die Erfindung ausgeht, wird ein Überspannungsschutz der Antriebssteuerung dafür genutzt, den Antrieb bei einer nicht motorischen Verstellung des Verstellelements oberhalb der normalbetriebsgemäßen Verstellgeschwindigkeit im Kurzschlussbetrieb zu bremsen. Dabei ist die Antriebssteuerung mit einer Treibereinheit zur Versorgung des Antriebs mit elektrischer Antriebsleistung ausgestattet, die eine übliche H-Brückenschaltung aufweist.

Bei der bekannten Antriebsanordnung wird die Tatsache ausgenutzt, dass der Antriebsmotor bei einer nicht motorischen Verstellung als Generator arbeitet und eine Generatorspannung erzeugt, durch die der Überspannungsschutz der Antriebssteuerung auslösbar ist. Das Auslösen des Überspannungsschutzes führt dort zu einem Kurzschließen des jeweiligen Antriebsmotors, was zu einem entsprechenden Bremsen des Antriebsmotors führt.

Vorteilhaft bei der bekannten Antriebsanordnung ist die Tatsache, dass mit einfachen Mitteln ein schnelles und starkes Abbremsen des Antriebs im Notfall und damit eine hohe Betriebssicherheit gewährleistet sind. In manchen Anwendungsfällen wäre allerdings ein moderateres Abbremsen wünschenswert, was vom Benutzer als Komfortsteigerung empfunden würde.

Der Erfindung liegt das Problem zugrunde, die bekannte Antriebsanordnung derart auszugestalten und weiterzubilden, dass der Benutzungskomfort bei gleichbleibender Betriebssicherheit erhöht wird.

Das obige Problem wird bei einer Antriebsanordnung gemäß dem Oberbegriff von Anspruch 1 durch die Merkmale des kennzeichnenden Teils von Anspruch 1 gelöst.

Wesentlich ist die grundsätzliche Erkenntnis, dass ein moderates Abbremsen des jeweiligen Antriebsmotors dadurch bewerkstelligt werden kann, dass der Antriebsmotor zum Abbremsen als Generator auf die Versorgung arbeitet, und nicht lediglich kurzgeschlossen wird. Bei der Versorgung handelt es sich hier regelmäßig um die Fahrzeugbatterie.

Im einzelnen weist die Antriebssteuerung eine Schalteinrichtung zum Durchschalten der Versorgungsspannung zu der Treibereinheit und eine Erfassungseinrichtung zur Erfassung einer nicht motorischen Verstellung des Verstellelements auf, wobei die Antriebssteuerung bei der Erfassung einer vorbestimmten, nicht motorischen Verstellung des Verstellelements die Versorgungsspannung in einem Schaltvorgang mittels der Schalteinrichtung zu den Versorgungsanschlüssen der Treibereinheit durchschaltet, so dass der Antriebsmotor wie oben angesprochen als Generator auf die Versorgung arbeitet und entsprechend gebremst wird.

Mit der vorschlagsgemäßen Lösung wird die Versorgung gewissermaßen durch den als Generator arbeitenden Antriebsmotor gespeist, was dazu führt, dass die Bremswirkung auf den Antriebsmotor regelmäßig geringer ist als bei einem reinen Kurzschießen des Antriebsmotors. Ferner ist die Wahrscheinlichkeit gering, dass eine Generatorspannung in einer Höhe entsteht, die einen Überspannungsschutz der Antriebssteuerung auslöst, was wiederum, wie weiter oben erläutert, zu einem Kurzschließen des Antriebsmotors führen könnte.

Bei der besonders bevorzugten Ausgestaltung gemäß Anspruch 6 wird der Verpolschutz der Antriebssteuerung, insbesondere die dem Verpolschutz zugeordnete Schalteinrichtung, dafür genutzt, die Versorgungsspannung im Falle der vorbestimmten, nicht motorischen Verstellung zu der Treibereinheit durchzuschalten, um das obige Abbremsen zu bewirken. Diese Doppelnutzung des ohnehin vorhandenen Verpolschutzes führt zu einer besonders einfachen Realisierung.

Bei der weiter bevorzugten Ausgestaltung gemäß Anspruch 10 ist zusätzlich zu dem Verpolschutz ein Überspannungsschutz vorgesehen, der bei Überschreiten einer Grenz-Generatorspannung auslöst und den Antriebsmotor im Kurzschlussbetrieb bremst. Dies kann für den Fall einer extrem schnellen nicht motorischen Betätigung vorteilhaft sein, vor allem, wenn das obige Durchschalten der Versorgungsspannung mit einer gewissen Ansprechzeit verbunden ist. In einem solchen Fall kann es vorteilhaft sein, dass der Überspannungsschutz mit einer entsprechenden Kurzschlussbremsung kurzzeitig anspricht, bis die Versorgungsspannung mittels der Schalteinrichtung wie oben angesprochen durchgeschaltet ist. Damit lässt sich die Betriebssicherheit bei einer extrem schnellen, nicht motorischen Verstellung des Verstellelements erhöhen.

Nach einer weiteren Lehre, der ebenfalls eigenständige Bedeutung zukommt, wird das obige Problem bei einer Verstellelementanordnung gemäß Anspruch 15 gelöst.

Die vorschlagsgemäße Verstellelementanordnung ist mit einem Verstellelement, insbesondere einer Heckklappe, eines Kraftfahrzeugs und mit einer vorschlagsgemäßen Antriebsanordnung zur motorischen Verstellung des Verstellelements ausgestattet. Zur Erläuterung dieser weiteren Lehre darf auf alle die Antriebsanordnung betreffenden Ausführungen verwiesen werden.

Im Folgenden wird die Erfindung anhand einer lediglich ein Ausführungsbeispiel darstellenden Zeichnung näher erläutert. In der Zeichnung zeigt
- Fig. 1: das Heck eines Kraftfahrzeugs in einer Seitenansicht mit einer Heckklappe und einer vorschlagsgemäßen Antriebsanordnung zur motorischen Verstellung der Heckklappe,
- Fig. 2: einen der beiden Antriebe der Antriebsanordnung gemäß Fig. 1 in einer Schnittdarstellung,
- Fig. 3: die Steuereinheit und die Treibereinheit der Antriebssteuerung für den Antrieb gemäß Fig. 2 in einer ganz schematischen Darstellung und
- Fig. 4: ein Halbbrückenmodul der H-Brückenschaltung gemäß Fig. 3 als Blockschaltbild.

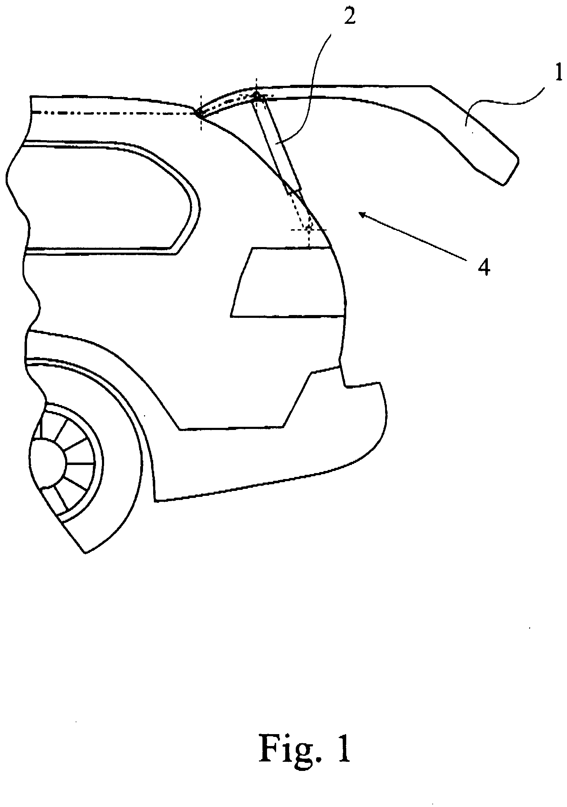

Die in Fig. 1 dargestellte Antriebsanordnung dient der motorischen Verstellung einer Heckklappe 1 eines Kraftfahrzeugs. Es sind aber auch alle anderen im einleitenden Teil der Beschreibung angesprochenen Verstellelemente vorteilhaft anwendbar. Alle folgenden Ausführungen zu einer Heckklappe gelten entsprechend gleichermaßen für alle anderen dort angesprochenen Verstellelemente.

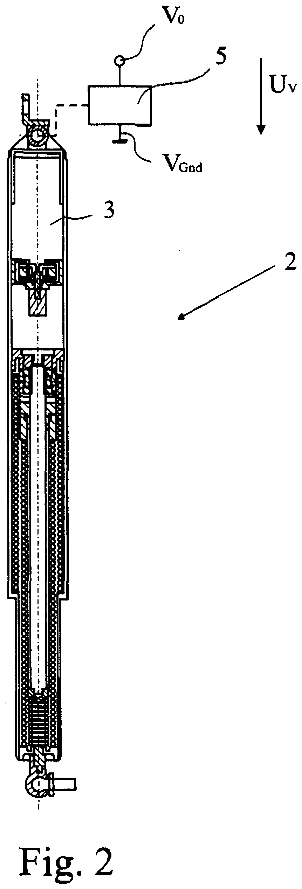

Der in Fig. 1 dargestellten Antriebsanordnung sind zwei identische Antriebe 2, die jeweils einen Antriebsmotor 3 aufweisen, zugeordnet. Die Antriebe 2 sind in den beiden seitlichen Bereichen einer Heckklappenöffnung 4 angeordnet. In Fig. 1 ist nur einer der beiden Antriebe 2 dargestellt. Fig. 2 zeigt diesen Antrieb 2 in einer Schnittansicht. Die folgenden Ausführungen betreffen nur den einen in Fig. 1 erkennbaren Antrieb 2. Sie gelten aber gleichermaßen für ggf. weitere vorhandene Antriebe.

Bei dem Antriebsmotor 3 handelt es sich vorzugsweise um einen Gleichstrommotor. Denkbar ist aber auch, dass hier ein Wechselstrommotor Anwendung findet.

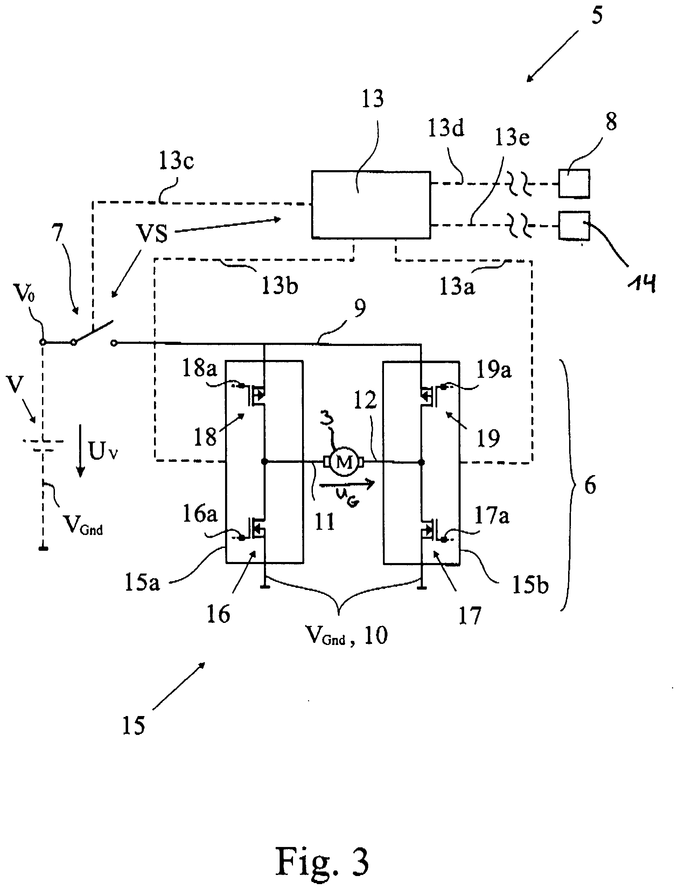

Die Antriebsanordnung ist ferner mit einer dem Antrieb 2 zugeordneten und in üblicher Weise an eine Versorgung V mit einer Versorgungsspannung U_{V} angeschlossenen Antriebssteuerung 5 ausgestattet. Mit "Versorgung" ist hier ganz allgemein die Einrichtung gemeint, die das Bordnetz mit der Versorgungsspannung U_{V} versorgt. Dabei handelt es sich regelmäßig um eine Fahrzeugbatterie, die in Fig. 3 nur schematisch dargestellt ist. Denkbar ist aber auch, dass die Versorgung V Schaltungskomponenten zur Spannungsstabilisierung und/oder zur Spannungsglättung aufweist. Die Versorgungsspannung U_{V} geht hier auf die Potentialdifferenz zwischen Versorgungspotential V₀ und Massepotential V_{Gnd} zurück.

Hier und vorzugsweise ist die Antriebssteuerung 5 beiden Antrieben 2 zugeordnet. Denkbar ist aber auch, dass jedem Antrieb 2 eine eigene Antriebssteuerung 5 zugeordnet ist.

Die vorschlagsgemäße Antriebsanordnung erlaubt ohne größeren konstruktiven Aufwand eine manuelle Verstellung der Heckklappe 1, da der Antrieb 2 nicht selbsthemmend ausgestaltet ist. Dies bedeutet, dass bei einer nicht motorischen, insbesondere manuellen, federkraft- oder schwerkraftbedingten Verstellung der Heckklappe 1 der Antriebsmotor 3 mitdreht und als Generator arbeitet. Dabei erzeugt der Antriebsmotor 3 eine entsprechende Generatorspannung U_{G}.

Die Antriebssteuerung 5 weist eine Treibereinheit 6 zur Versorgung des Antriebs 2 mit elektrischer Antriebsleistung auf. Für die Ausgestaltung der Treibereinheit 6 sind aus dem Stand der Technik verschiedene Realisierungsmöglichkeiten bekannt. Eine bevorzugte Realisierungsmöglichkeit besteht hier in der Ausstattung der Treibereinheit 6 mit einer noch zu erläuternden H-Brückenschaltung.

In Fig. 3 ist gezeigt, dass die Antriebssteuerung 5 eine Schalteinrichtung 7 zum Durchschalten der Versorgungsspannung Uv zu den Versorgungsanschlüssen 9, 10 der Treibereinheit 6 aufweist. Diese Schalteinrichtung 7 ist vorzugsweise Bestandteil eines Verpolschutzes VS, wie noch erläutert wird.

Der Begriff "Durchschalten der Versorgungsspannung" ist vorliegend weit zu verstehen und umfasst sowohl das Durchschalten des Versorgungspotentials V₀ als auch das Durchschalten des Massepotentials V_{Gnd} zu den Versorgungsanschlüssen 9, 10 der Treibereinheit 6. In manchen Anwendungsfallen kann es vorteilhaft sein, sowohl das Versorgungspotential V₀ als auch das Massepotential V_{Gnd} durchzuschalten. Bei dem dargestellten und insoweit bevorzugten Ausführungsbeispiel wird ausschließlich das Versorgungspotential V₀ durchgeschaltet, wie der Darstellung gemäß Fig. 3 zu entnehmen ist.

Die Antriebssteuerung 5 ist ferner mit einer Erfassungseinrichtung 8 zur Erfassung einer nicht motorischen Verstellung der Heckklappe 1 ausgestattet. Für die Realisierung der Erfassungseinrichtung 8 sind zahlreiche Möglichkeiten bekannt. Vorzugsweise ist der Antrieb 2, hier der Spindelantrieb 2, mit einem inkrementellen Sensor ausgestattet, der hier und vorzugsweise als Hall-Sensor ausgestaltet ist. Hier können alle anderen Arten von Sensoren Anwendung finden.

Die Erfassungseinrichtung 8 kann auch der Heckklappe 1 zugeordnet sein, so dass die Heckklappenverstellung direkt, und nicht indirekt über eine Verstellung des Antriebs 2, erfasst wird.

Für die Antriebssteuerung 5 liegt eine nicht motorische Verstellung der Heccklappe stets vor, wenn eine Verstellung der Heckklappe 1 mittels der Erfassungseinrichtung 8 erfasst worden ist, ohne dass die Treibereinheit 6 angesteuert worden ist.

Wesentlich ist nun, dass die Antriebssteuerung 5 bei der Erfassung einer vorbestimmten, nicht motorischen Verstellung der Heckklappe 1 die Versorgungsspannung Uv in einem Schaltvorgang mittels der Schalteinrichtung 7 zu den Versorgungsanschlüssen 9, 10 der Treibereinheit 6 durchschaltet, so dass der Antriebsmotor 3 als Generator auf die Versorgung V arbeitet und entsprechend gebremst wird.

Mit dem Begriff "vorbestimmte motorische Verstellung des Verstellelements" ist vorliegend gemeint, dass nicht notwendigerweise jede Erfassung einer nicht motorischen Verstellung des Verstellelements 1 zu einem vorschlagsgemäßen Schaltvorgang führt. Vielmehr ist es vorzugsweise so, dass der Schaltvorgang erst bei Überschreiten einer Schalt-Verstellgeschwindigkeit vorgenommen wird. Dies wird weiter unten noch im Detail erläutert.

Interessant bei der vorschlagsgemäßen Lösung ist die Tatsache, dass im Falle der vorbestimmten, nicht motorischen Verstellung des Verstellelements 1 gewissermaßen ein Ladestrom von dem als Generator arbeitenden Antriebsmotor 3 auf den Verbraucher V geleitet wird. Dieser Ladestrom wird bei einer von null verschiedenen Versorgungsspannung U_{V} stets kleiner sein als der Kurzschlussstrom, der sich bei kurzgeschlossenen Motoranschlüssen 11, 12 einstellt, so dass die resultierende Bremswirkung geringer ist als die auf eine Kurzschlussbremsung zurückgehende Bremswirkung.

Bei dem dargestellten und besonders bevorzugten Ausführungsbeispiel ist es so, dass die Generatorspannung U_{G} des Antriebsmotors 3 über die Treibereinheit 6 auf die Versorgungsanschlüsse 9, 10 der Treibereinheit 6 wirkt, so dass der Antriebsmotor 3 bei wie oben erläutert durchgeschalteter Versorgungsspannung U_{V} als Generator auf die Versorgung V arbeitet und entsprechend gebremst wird. Für das Durchschalten der Versorgungsspannung Uv auf die Versorgungsanschlüsse 9, 10 reicht hier das Schließen der in Fig. 3 dargestellten Schalteinrichtung 7.

Wie die Generatorspannung U_{G} des Antriebsmotors 3 über die Treibereinheit 6 im Einzelnen auf die Versorgungsanschlüsse 9, 10 der Treibereinheit 6 wirkt, wird weiter unten anhand einer Treibereinheit 6 mit H-Brückenschaltung näher erläutert.

Insbesondere um Verluste im Stillstandsbetrieb soweit wie möglich zu reduzieren, ist es vorzugsweise vorgesehen, dass die Antriebssteuerung 5 die Versorgungsspannung Uv jedenfalls im Stillstandsbetrieb mittels der Schalteinrichtung 7 von der Treibereinheit 6 trennt. Die Versorgungsspannung U_{V} wird dabei zu der Treibereinheit 6 durchgeschaltet, wenn eine motorische Verstellung erfolgen soll oder wenn eine obige, vorbestimmte, nicht motorische Verstellung des Verstellelements 1 erfaßt worden ist.

Zur Ansteuerung der Treibereinheit 6 ist die Antriebssteuerung 5 vorzugsweise mit einer Steuereinheit 13 ausgestattet. Die Steuereinheit 13 übernimmt vorzugsweise auch die Funktion einer Regelung, die vorbestimmte Verstellbewegungsverläufe umsetzt. Ferner übernimmt die Steuereinheit 13 hier auch die Ansteuerung der Schalteinheit 7. Entsprechend ist die Steuereinheit 13 über die Steuerleitungen 13a, 13b mit der Treibereinheit 6, über die Steuerleitung 13c mit der Schalteinrichtung 7 und über die Steuerleitung 13d mit der Erfassungseinrichtung 8 gekoppelt.

Regelmäßig handelt es sich bei der Steuereinheit 13 um einen Mikrocontroller, der dezentral im Bereich der Antriebsanordnung gelegen ist. Denkbar ist aber auch, dass die Steuereinheit 13 Bestandteil einer zentralen Kraftfahrzeugsteuerung ist.

Die Antriebssteuerung 5, hier und vorzugsweise die Steuereinheit 13, ist im Sinne eines stromsparenden Betriebs nicht nur in einen Betriebs-Modus, in dem die Heckklappe 1 motorisch verstellbar ist, sondern auch in einen stromsparenden Standby-Modus bringbar. Im Standby-Modus sind regelmäßig nur die Abschnitte der Steuereinheit 13 aktiviert, die für ein späteres Aufwecken der Steuereinheit 13, also eine Überführung der Steuereinheit 13 in den Betriebs-Modus, erforderlich sind. Das Aufwecken der Steuereinheit 13 erfolgt vorzugsweise durch eine Benutzerbetätigung über eine Betätigungseinrichtung 14, die über eine Steuerleitung 13e mit der Steuereinheit 13 gekoppelt ist. Eine solche Betätigungseinrichtung 14 kann ein an der Heckklappe 1 angeordneter Taster o. dgl. sein.

Vorzugsweise ist es so, dass die Versorgungsspannung Uv mittels der Schalteinrichtung 7 im Betriebs-Modus zu den Versorgungsanschlüssen 9, 10 der Treibereinheit 6 durchgeschaltet ist und im Standby-Modus von der Treibereinheit 6 getrennt ist. Dies stellt sich auch im Hinblick auf die Realisierung eines Verpolschutzes VS als besonders vorteilhaft dar. In besonders bevorzugter Ausgestaltung ist die Antriebssteuerung 5 nämlich mit einem Verpolschutz VS im Hinblick auf die korrekte Polung der Versorgungsspannung Uv ausgestattet, wobei die Schalteinrichtung 7 vorzugsweise Bestandteil des Verpolschutzes VS ist. Die Funktion des Verpolschutzes VS besteht darin, dass die Schalteinrichtung 7 bei fehlerhafter Polung der Versorgungsspannung U_{V} die Versorgungsspannung U_{V} von der Treibereinheit 6 trennt oder getrennt belässt.

Hier und vorzugsweise ist die Steuereinheit 13 Bestandteil des Verpolschutzes VS, wobei die Steuereinheit 13 bei einer fehlerhaften Polung der Versorgungsspannung U_{V} die Versorgungsspannung Uv mittels der Schalteinrichtung 7 von der Treibereinheit 6 trennt oder getrennt belässt.

Im Einzelnen ist die Anordnung so getroffen, dass die Schalteinrichtung 7 bei Ausbleiben einer Ansteuerung durch die Steuereinheit 13 die Versorgungsspannung Uv stets von der Treibereinheit 6 trennt und, vorzugsweise, dass die Steuereinheit 13 bei fehlerhafter Polung der Versorgungsspannung U_{V} keine Ansteuerung der Schalteinrichtung 7 vornimmt. In besonders bevorzugter Ausgestaltung ist es dabei so, dass die Schalteinrichtung 7 mechanisch in eine trennende Schaltstellung vorgespannt ist. Dies ist bei der Ausgestaltung der Schalteinrichtung 7 als elektromechanisches Relais der Fall.

Es wurde schon darauf hingewiesen, dass das vorschlagsgemäße Durchschalten der Versorgungsspannung Uv zu den Versorgungsanschlüssen 9, 10 der Treibereinheit 6 nur bei einer vorbestimmten, nicht motorischen Verstellung der Heccklappe 1 erfolgen soll. Hier und vorzugsweise ist es so, dass mittels der Erfassungseinrichtung 8 die Verstellgeschwindigkeit einer nicht motorischen Verstellung der Heckklappe 1 ermittelbar ist und dass die Antriebssteuerung 5 die Versorgungsspannung U_{V} erst beim Überschreiten einer Schalt-Verstellgeschwindigkeit zu der Treibereinheit 6 durchschaltet. Damit ist gewährleistet, dass langsame und damit ungefährliche, nicht motorische Verstellbewegungen der Heccklappe 1, wie normalbetriebsgemäße manuelle Verstellbewegungen, ungebremst erfolgen können. Eine Bremsung erfolgt erst nach Überschreiten einer vorbestimmten Schalt-Verstellgeschwindigkeit, die beispielsweise im Notfall auftritt.

In besonders bevorzugter Ausgestaltung ist die Antriebssteuerung 5 auch mit einem im einleitenden Teil der Beschreibung angesprochenen Überspannungsschutz US ausgestattet, der durch das Überschreiten einer Grenz-Versorgungsspannung Uv auslösbar ist. Dabei ist die Anordnung ferner so getroffen, dass der Überspannungsschutz US außerdem durch eine nicht motorische Verstellung der Heckklappe 1 bei Überschreiten einer Grenz-Generatorspannung U_{G} auslösbar ist. In besonders bevorzugter Ausgestaltung koppelt der Überspannungsschutz US im ausgelösten Zustand die Motoranschlüsse 11, 12 des Antriebsmotors 3 elektrisch miteinander, wodurch der Antriebsmotor 3 wiederum gebremst wird. Hier und vorzugsweise führt das Auslösen des Überspannungsschutzes US zu einem Kurzschließen der Motoranschlüsse 11, 12.

Insgesamt sind also zwei Mechanismen zum Abbremsen des Antriebsmotors 3 bei einer nicht motorischen Verstellung der Heckklappe 1 vorgesehen. Dabei ist die Anordnung vorzugsweise so getroffen, dass der Überspannungsschutz US durch eine nicht motorische Verstellung der Heckklappe 1 nur auslösbar ist, sofern bei von der Treibereinheit 6 getrennter Versorgungsspannung Uv die Verstellgeschwindigkeit oberhalb einer Grenz-Verstellgeschwindigkeit liegt, die wiederum größer als die Schalt-Verstellgeschwindigkeit ist. Das bedeutet, dass das Abbremsen des Antriebsmotors 3 bei einer nicht motorischen Verstellung der Heckklappe 1 grundsätzlich durch die Schalteinrichtung 7 erfolgt. Eine Ausnahme besteht für den Fall, dass bei noch getrennter Versorgungsspannung U_{V} eine extrem schnelle nicht motorische Verstellung der Heckklappe 1 auftritt, die zu einem Auslösen des Überspannungsschutzes US führt. So stellt der Überspannungsschutz US eine zusätzliche Sicherheit für den Fall extremer nicht motorischer Verstellbewegungen der Heckklappe 1 bereit.

Die Funktionsweise eines obigen Überspannungsschutzes US sowie dessen Nutzung für das Abbremsen der Heckklappe 1 ist Gegenstand der Patentanmeldung WO 2010/083999 A1, die auf die Anmelderin zurückgeht und deren Inhalt in vollem Umfange zum Gegenstand der vorliegenden Anmeldung gemacht wird.

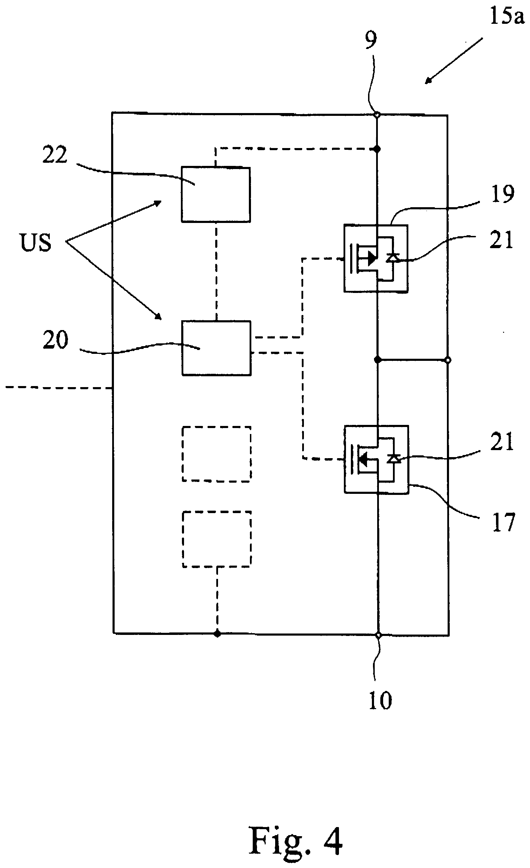

Die Antriebssteuerung 5 ist wie in den Fig. 3 und 4 gezeigt, mit einer H-Brückenschaltung 15 mit zwei Low-Side-Schaltern 16, 17 und zwei High-Side-Schaltern 18, 19 zur Ansteuerung des Antriebsmotors 3 ausgestattet. Die H-Brückenschaltung 15 ist in üblicher Weise mit zwei Halbbrücken 15a, 15b aufgebaut, die jeweils einen der Low-Side-Schalter 16, 17 und einen der High-Side-Schalter 18, 19 aufweisen. Der Low-Side-Schalter 16, 17 und der High-Side-Schalter 18, 19 einer Halbbrücke 15a, 15b sind hinsichtlich ihrer Schaltausgänge in Reihe geschaltet. Die Motoranschlüsse 11, 12 des Antriebsmotors 3 sind mit den Kontaktstellen der jeweils in Reihe geschalteten Schalterpaare 16, 18; 17, 19 verbunden.

Hier und vorzugsweise ist es so, dass der Überspannungsschutz US im ausgelösten Zustand die beiden High-Side-Schalter 18, 19 durchschaltet und die beiden Low-Side-Schalter 16, 17 sperrt. Denkbar ist allerdings auch, dass umgekehrt im ausgelösten Zustand des Überspannungsschutzes US die beiden Low-Side-Schalter 16, 17 durchgeschaltet und die beiden High-Side-Schalter 18, 19 gesperrt sind. In beiden oben genannten Fällen ist der Antriebsmotor 3 kurzgeschlossen und befindet sich im Bremsbetrieb.

Es sind eine Reihe vorteilhafter Varianten für die Realisierung der Low-Side-Schalter 16, 17 und der High-Side-Schalter 18, 19 denkbar. Hier und vorzugsweise sind diese Schalter 16, 17, 18, 19 als MOSFETs ausgestaltet, wobei es sich bei den Low-Side-Schaltern 16, 17 um N-Kanal-MOSFETs und bei den High-Side-Schaltem 18, 19 um P-Kanal-MOSFETs handelt. Die Gate-Anschlüsse 16a, 17a, 18a, 19a der Schalter 16, 17, 18, 19 sind mit einer Logikeinheit 20 gekoppelt, die nur in der noch zu erläuternden Fig. 4 dargestellt ist.

Die Anordnung ist nun so getroffen, dass die Generatorspannung U_{G} über die Body-Dioden 21 eines High-Side-Schalters 18, 19 der einen Halbbrücke 15a, 15b und eines Low-Side-Schalters 16, 17 der anderen Halbbrücke 15a, 15b der H-Brückenschaltung 15 zumindest zum Teil zu den Versorgungsanschlüssen 9, 10 der Treibereinheit 6, hier der H-Brückenschaltung 15, durchgeschaltet ist.

Die Existenz der Body-Dioden 21 ist MOSFET-Schaltelementen immanent. Zur Veranschaulichung sind die Body-Dioden 21 in der noch zu erläuternden Fig. 4 als diskrete Bauelemente dargestellt. Im Falle des Durchschaltens der Versorgungsspannung U_{V} mittels der Schalteinrichtung 7 zu den Versorgungsanschlüssen 9, 10 der Treibereinheit 6 fließt bei einer nicht motorischen Verstellung der Heckklappe 1 der Ladestrom des als Generator betriebenen Antriebsmotors 3 über die Body-Dioden 21 und über die Schalteinrichtung 7 in den Verbraucher V, was das beschriebene Abbremsen des Antriebsmotors 3 bewirkt. Fig. 3 zeigt, dass die Generatorspannung U_{G} dabei jedenfalls zum Teil auf die Versorgungsspannung U_{V} aufgeschaltet wird, was jedenfalls kurzzeitig zu einer Schwankung in der Versorgungsspannung U_{V} führen kann. Aufgrund des schnellen Ladungsausgleichs zwischen dem als Generator arbeitenden Antriebsmotor 3 und der Versorgung V bewegt sich die Schwankung in der Versorgungsspannung U_{V} aber in vertretbaren Grenzen.

Eine kostengünstige Realisierung der vorschlagsgemäßen Antriebssteuerung 5 mit Standardbauteilen ergibt sich dadurch, dass die beiden Halbbrücken 15a, 15b der H-Brückenschaltung 15 jeweils als integriertes Halbbrückenmodul ausgestaltet sind und dass beide Halbbrückenmodule jeweils mit einem separaten Überspannungsschutz US ausgestattet sind. Mit "integriert" ist hier gemeint, dass es sich bei den Halbbrückenmodulen um integrierte Schaltkreise handelt. Den grundsätzlichen Aufbau eines solchen Halbbrückenmoduls zeigt Fig. 4.

Das in Fig. 4 dargestellte Halbbrückenmodul ist mit einer Logikeinheit 20 zur Ansteuerung des Low-Side-Schalters 16 und des High-Side-Schalters 18 ausgestattet. Dabei weist der Überspannungsschutz US der beiden Halbbrückenmodule jeweils eine mit der Logikeinheit 20 verbundene Detektionseinheit 22 zur Detektion des Überschreitens der Versorgungsspannung Uv über die Grenz-Versorgungsspannung auf.

Es wurde schon darauf hingewiesen, dass die Antriebsanordnung vorzugsweise zwei Antriebe 2 aufweist, wobei die Antriebssteuerung 5 zur Ansteuerung der Antriebsmotoren 3 der Antriebe 2 jeweils eine Treibereinheit 6, hier und vorzugsweise jeweils eine H-Brückenschaltung 15, aufweist, wobei die jeweils korrespondierenden Versorgungsanschlüsse 9, 10 der Treibereinheiten 6, hier und vorzugsweise der H-Brückenschaltungen 15, zusammengeschaltet sind und wobei mittels der Schalteinrichtung 7 die Versorgungsspannung Uv zu den Versorgungsanschlüssen 9, 10 beider Treibereinheiten 6, hier und vorzugsweise beider H-Brückenschaltungen 15, durchschaltbar ist.

Die vorschlagsgemäße Lösung lässt sich auf alle möglichen Verstellelemente 1 eines Kraftfahrzeugs anwenden. Vorzugsweise handelt es sich bei dem Verstellelement 1 um eine Heckklappe, einen Heckdeckel, eine Motorhaube, eine Tür, insbesondere Seitentür oder um einen Laderaumboden eines Kraftfahrzeugs.

Nach einer weiteren Lehre, der ebenfalls eigenständige Bedeutung zukommt, wird eine Verstellelementanordnung eines Kraftfahrzeugs mit einem Verstellelement 1, insbesondere einer Heckklappe 1 und mit einer oben beschriebenen, vorschlagsgemäßen Antriebsanordnung zur motorischen Verstellung des Verstellelements 1 beansprucht. Auf die obigen Ausführungen zu der vorschlagsgemäßen Antriebsanordnung darf in vollem Umfange verwiesen werden.

## Patentansprüche

1. Antriebsanordnung zur motorischen Verstellung eines Verstellelements (1) eines Kraftfahrzeugs, wobei mindestens ein Antrieb (2) mit einem elektrischen Antriebsmotor (3), insbesondere Gleichstrommotor, und eine dem Antrieb (2) zugeordnete und an eine Versorgung (V), insbesondere eine Fahrzeugbatterie, mit einer Versorgungsspannung U_{V} angeschlossene Antriebssteuerung (5) vorgesehen sind, wobei der Antrieb (2) nicht selbsthemmend ausgestaltet ist, so dass bei einer nicht motorischen Verstellung des Verstellelements (1) der Antriebsmotor (3) als Generator arbeitet und eine Generatorspannung U_{G} erzeugt, wobei die Antriebssteuerung (5) eine Treibereinheit (6) zur Versorgung des mindestens einen Antriebs (2) mit elektrischer Antriebsleistung aufweist,
**dadurch gekennzeichnet,**
**dass** die Antriebssteuerung (5) eine Schalteinrichtung (7) zum Durchschalten der Versorgungsspannung (U_{V}) zu der Treibereinheit (6) und eine Erfassungseinrichtung (8) zur Erfassung einer nicht motorischen Verstellung des Verstellements (1) aufweist und dass die Antriebssteuerung (5) bei der Erfassung mittels der Erfassungseinrichtung (8) einer vorbestimmten, nicht motorischen Verstellung des Verstellelements (1) die Versorgungsspannung (U_{V}) in einem Schaltvorgang mittels der Schalteinrichtung (7) zu den Versorgungsanschlüssen (9, 10) der Treibereinheit (6) durchschaltet, so dass der Antriebsmotor (3) als Generator auf die Versorgung (V) arbeitet und entsprechend gebremst wird.

2. Antriebsanordnung nach Anspruch 1, **dadurch gekennzeichnet, dass** die Generatorspannung (U_{G}) des Antriebsmotors (3) über die Treibereinheit (6) auf die Versorgungsanschlüsse (9, 10) der Treibereinheit (6) wirkt, so dass der Antriebsmotor (3) bei durchgeschalteter Versorgungsspannung (U_{V}) als Generator auf die Versorgung (V) arbeitet und entsprechend gebremst wird.

3. Antriebsanordnung nach Anspruch 1 oder 2, **dadurch gekennzeichnet, dass** die Antriebssteuerung (5) die Versorgungsspannung (U_{V}) jedenfalls im Stillstandsbetrieb mittels der Schalteinrichtung (7) von der Treibereinheit (6) trennt.

4. Antriebsanordnung nach einem der vorhergehenden Ansprüche, **dadurch gekennzeichnet, dass** die Antriebssteuerung (5) eine Steuereinheit (13) zur Ansteuerung der Treibereinheit (6) aufweist.

5. Antriebsanordnung nach einem der vorhergehenden Ansprüche, **dadurch gekennzeichnet, dass** die Antriebssteuerung (5), insbesondere die Steuereinheit (13), in einen Betriebs-Modus, in dem das Verschlusselement (1) motorisch verstellbar ist, und in einen stromsparenden Standby-Modus bringbar ist, dass die Versorgungsspannung (U_{V}) mittels der Schalteinrichtung (7) im Betriebs-Modus zu den Versorgungsanschlüssen (9, 10) der Treibereinheit (6) durchgeschaltet ist und im Standby-Modus von der Treibereinheit (6) getrennt ist.

6. Antriebsanordnung nach einem der vorhergehenden Ansprüche, **dadurch gekennzeichnet, dass** die Antriebssteuerung (5) einen Verpolschutz (VS) im Hinblick auf die Polung der Versorgungsspannung (U_{V}) aufweist, dass die Schalteinrichtung (7) Bestandteil des Verpolschutzes (VS) ist und dass die Schalteinrichtung (7) bei fehlerhafter Polung der Versorgungsspannung (U_{V}) die Versorgungsspannung (U_{V}) von der Treibereinheit (6) trennt oder getrennt belässt.

7. Antriebsanordnung nach einem der vorhergehenden Ansprüche, **dadurch gekennzeichnet, dass** die Steuereinheit (13) Bestandteil des Verpolschutzes (VS) ist und bei einer fehlerhaften Polung der Versorgungsspannung (U_{V}) die Versorgungsspannung (U_{V}) mittels der Schalteinrichtung (7) von der Treibereinheit (6) trennt oder getrennt belässt.

8. Antriebsanordnung nach einem der vorhergehenden Ansprüche, **dadurch gekennzeichnet, dass** die Schalteinrichtung (7) bei Ausbleiben einer Ansteuerung durch die Steuereinheit (13) die Versorgungsspannung (U_{V}) stets von der Treibereinheit (6) trennt, vorzugsweise, dass die Steuereinheit (13) bei fehlerhafter Polung der Versorgungsspannung (U_{V}) keine Ansteuerung der Schalteinrichtung (7) vornimmt, vorzugsweise, dass die Schalteinrichtung (7) mechanisch in eine trennende Schaltstellung vorgespannt ist.

9. Antriebsanordnung nach einem der vorhergehenden Ansprüche, **dadurch gekennzeichnet, dass** mittels der Erfassungseinrichtung (8) die Verstellgeschwindigkeit einer nicht motorischen Verstellung des Verschlusselements (1) ermittelbar ist und dass die Antriebssteuerung (5) die Versorgungsspannung (U_{V}) erst beim Überschreiten einer Schalt-Verstellgeschwindigkeit zu den Versorgungsanschlüssen (9, 10) der Treibereinheit (6) durchschaltet.

10. Antriebsanordnung nach einem der vorhergehenden Ansprüche, **dadurch gekennzeichnet, dass** die Antriebssteuerung (5) mit einem Überspannungsschutz (US) ausgestattet ist, der durch das Überschreiten einer Grenz-Versorgungsspannung U_{V} auslösbar ist und dass die Anordnung ferner so getroffen ist, dass der Überspannungsschutz (US) außerdem durch eine nicht motorische Verstellung des Verstellelements (1) bei Überschreiten einer Grenz-Generatorspannung U_{G} auslösbar ist, vorzugsweise, dass der Überspannungsschutz (US) im ausgelösten Zustand die Anschlüsse (11, 12) des Antriebsmotors (3) elektrisch miteinander koppelt, insbesondere kurzschließt, und damit den Antriebsmotor (3) bremst.

11. Antriebsanordnung nach Anspruch 10, **dadurch gekennzeichnet, dass** die Anordnung so getroffen ist, dass der Überspannungsschutz (US) durch eine nicht motorische Verstellung des Verstellelements (1) nur auslösbar ist, sofern bei getrennter Versorgungsspannung (U_{V}) die Verstellgeschwindigkeit oberhalb einer Grenz-Verstellgeschwindigkeit, die größer als die Schalt-Verstellgeschwindigkeit ist, liegt.

12. Antriebsanordnung nach einem der vorhergehenden Ansprüche, **dadurch gekennzeichnet, dass** die Treibereinheit (6) eine H-Brückenschaltung (15) mit zwei Low-Side-Schaltern (16, 17) und zwei High-Side-Schaltern (18, 19) zur Ansteuerung des Antriebsmotors (3) aufweist, vorzugsweise, dass die H-Brückenschaltung (15) zwei Halbbrücken (15a, 15b) aufweist, die jeweils einen der Low-Side-Schalter (16, 17) und einen der High-Side-Schalter (18, 19) aufweisen, weiter vorzugsweise, dass die Low-Side-Schalter (16, 17) und die High-Side-Schalter (18, 19) als MOSFETs ausgestaltet sind und dass die Anordnung so getroffen ist, dass die Generatorspannung (U_{G}) über die Body-Dioden (21) eines High-Side-Schalters (18, 19) der einen Halbbrücke (15a, 15b) und eines Low-Side-Schalters (16, 17) der anderen Halbbrücke (15a, 15b) der H-Brückenschaltung (15) zumindest zum Teil auf die Versorgungsanschlüsse (9, 10) der H-Brückenschaltung (15) wirkt.

13. Antriebsanordnung nach einem der vorhergehenden Ansprüche, **dadurch gekennzeichnet, dass** zwei Antriebe (2) vorgesehen sind, dass die Antriebssteuerung (5) zur Ansteuerung der Antriebsmotoren (3) der Antriebe (2) jeweils eine Treibereinheit (6), insbesondere eine H-Brückenschaltung (15), aufweist und dass die jeweils korrespondierenden Versorgungsanschlüsse (9, 10) der Treibereinheiten (6), insbesondere der H-Brückenschaltungen (15), zusammengeschaltet sind und dass mittels der Schalteinrichtung (7) die Versorgungsspannung (U_{V}) zu den Versorgungsanschlüssen (9, 10) beider Treibereinheiten (6), insbesondere beider H-Brückenschaltungen, durchschaltbar ist.

14. Antriebsanordnung nach einem der vorhergehenden Ansprüche, **dadurch gekennzeichnet, dass** das Verstellelement (1) als Heckklappe, als Heckdeckel, als Motorhaube, als Tür, insbesondere Seitentür, oder als Laderaumboden des Kraftfahrzeugs ausgestaltet ist.

15. Verstellelementanordnung eines Kraftfahrzeugs mit einem Verstellelement (1), insbesondere einer Heckklappe (1) und mit einer Antriebsanordnung zur motorischen Verstellung des Verstellelements (1) nach einem der vorhergehenden Ansprüche.

## Claims

1. Drive arrangement for the motorized adjustment of an adjustment element (1) of a motor vehicle, wherein at least one drive (2) comprising an electric drive motor (3), in particular DC motor, and a drive controller (5) which is associated with the drive (2) and is connected to a supply (V), in particular a vehicle battery, having a supply voltage (U_{V}) are provided, wherein the drive (2) is designed in a non-self-locking manner, so that, in the event of a non-motorized adjustment of the adjustment element (1), the drive motor (3) operates as a generator and generates a generator voltage (U_{G}), wherein the drive controller (5) has a driver unit (6) for supplying electrical drive power to the at least one drive (2),
**characterized**
**in that** the drive controller (5) has a switching device (7) for connecting the supply voltage (U_{V}) to the driver unit (6) and has a detection device (8) for detecting a non-motorized adjustment of the adjustment element (1), and in that the drive controller (5), when a predetermined, non-motorized adjustment of the adjustment element (1) is detected by means of the detection device (8), connects the supply voltage (U_{V}) to the supply connections (9, 10) of the driver unit (6) by means of the switching device (7) in one switching operation, so that the drive motor (3) operates on the supply (V) as a generator and is accordingly braked.

2. Drive arrangement according to Claim 1, **characterized in that** the generator voltage (U_{G}) of the drive motor (3) across the driver unit (6) acts on the supply connections (9, 10) of the driver unit (6), so that the drive motor (3) operates on the supply (V) as a generator and is accordingly braked when supply voltage (U_{V}) is connected.

3. Drive arrangement according to Claim 1 or 2, **characterized in that** the drive controller (5) disconnects the supply voltage (U_{V}) from the driver unit (6) by means of the switching device (7) in the stationary mode in any case.

4. Drive arrangement according to one of the preceding claims, **characterized in that** the drive controller (5) has a control unit (13) for actuating the driver unit (6).

5. Drive arrangement according to one of the preceding claims, **characterized in that** the drive controller (5), in particular the control unit (13), can be moved to an operating mode, in which the closure element (1) can be adjusted by motor, and to a power-saving standby mode, **in that** the supply voltage (U_{V}) is connected to the supply connections (9, 10) of the driver unit (6) by means of the switching device (7) in the operating mode and is disconnected from the driver unit (6) in the standby mode.

6. Drive arrangement according to one of the preceding claims, **characterized in that** the drive controller (5) has a polarity-reversal protection means (VS) in respect of the polarity of the supply voltage (U_{V}), **in that** the switching device (7) is a constituent part of the polarity-reversal protection means (VS), and **in that** the switching device (7) disconnects the supply voltage (U_{V}) from the driver unit (6), or leaves the said supply voltage disconnected from the said driver unit, when the polarity of the supply voltage (U_{V}) is incorrect.

7. Drive arrangement according to one of the preceding claims, **characterized in that** the control unit (13) is a constituent part of the polarity-reversal protection means (VS) and disconnects the supply voltage (U_{V}) from the driver unit (6), or leaves the said supply voltage disconnected from the said driver unit, by means of the switching device (7) when the polarity of the supply voltage (U_{V}) is incorrect.

8. Drive arrangement according to one of the preceding claims, **characterized in that** the switching device (7) always disconnects the supply voltage (U_{V}) from the driver unit (6) when there is no actuation by the control unit (13), preferably **in that** the control unit (13) does not actuate the switching device (7) when the polarity of the supply voltage (U_{V}) is incorrect, preferably **in that** the switching device (7) is mechanically prestressed into a disconnecting switching position.

9. Drive arrangement according to one of the preceding claims, **characterized in that** the adjustment speed of a non-motorized adjustment of the closure element (1) can be ascertained by means of the detection device (8), and **in that** the drive controller (5) connects the supply voltage (U_{V}) to the supply connections (9, 10) of the driver unit (6) only when a switching adjustment speed is exceeded.

10. Drive arrangement according to one of the preceding claims, **characterized in that** the drive controller (5) is equipped with an overvoltage protection means (US) which can be triggered by a limit supply voltage (U_{V}) being exceeded, and **in that** the arrangement is further made such that the overvoltage protection means (US) can also be triggered by a non-motorized adjustment of the adjustment element (1) when a limit generator voltage (U_{G}) is exceeded, preferably in that the overvoltage protection means (US) electrically couples, in particular short-circuits, the connections (11, 12) of the drive motor (3) to one another in the triggered state, and therefore brakes the drive motor (3).

11. Drive arrangement according to Claim 10, **characterized in that** the arrangement is made such that the overvoltage protection means (US) can only be triggered by a non-motorized adjustment of the adjustment element (1) if, when the supply voltage (U_{V}) is disconnected, the adjustment speed lies above a limit adjustment speed which is greater than the switching adjustment speed.

12. Drive arrangement according to one of the preceding claims, **characterized in that** the driver unit (6) has an H-bridge circuit (15) comprising two low-side switches (16, 17) and two high-side switches (18, 19) for actuating the drive motor (3), preferably **in that** the H-bridge circuit (15) has two half-bridges (15a, 15b) which each have one of the low-side switches (16, 17) and one of the high-side switches (18, 19), further preferably **in that** the low-side switches (16, 17) and the high-side switches (18, 19) are designed as MOSFETs, and **in that** the arrangement is made such that the generator voltage (U_{G}) acts at least partially on the supply connections (9, 10) of the H-bridge circuit (15) by means of the body diodes (21) of a high-side switch (18, 19) of one half bridge (15a, 15b) and of a low-side switch (16, 17) of the other half bridge (15a, 15b) of the H-bridge circuit (15).

13. Drive arrangement according to one of the preceding claims, **characterized in that** two drives (2) are provided, **in that** the drive controller (5) has a driver unit (6), in particular an H-bridge circuit (15), for actuating the drive motors (3) of the drives (2) in each case, and **in that** the respectively corresponding supply connections (9, 10) of the driver units (6), in particular of the H-bridge circuits (15), are connected, and **in that** the supply voltage (U_{V}) can be connected to the supply connections (9, 10) of the two driver units (6), in particular the two H-bridge circuits, by means of the switching device (7).

14. Drive arrangement according to one of the preceding claims, **characterized in that** the adjustment element (1) is designed as a tailgate, as a boot lid, as an engine hood, as a door, in particular side door, or as a luggage compartment floor of the motor vehicle.

15. Adjustment element arrangement of a motor vehicle comprising an adjustment element (1), in particular a tailgate (1), and comprising a drive arrangement for the motorized adjustment of the adjustment element (1) according to one of the preceding claims.

## Revendications

1. Ensemble d'entraînement destiné au déplacement motorisé d'un élément de déplacement (1) d'un véhicule automobile, dans lequel sont prévus au moins un entraînement (2) avec un moteur d'entraînement électrique (3), en particulier un moteur à courant continu, et une commande d'entraînement (5) associée à l'entraînement (2) et connectée à une alimentation (V), en particulier à une batterie de véhicule, avec une tension d'alimentation (U_{V}), dans lequel l'entraînement (2) n'est pas configuré de manière autobloquante de sorte que lors d'un déplacement non motorisé de l'élément de déplacement (1), le moteur d'entraînement (3) fonctionne comme un générateur et génère une tension de générateur (U_{G}), la commande d'entraînement (5) présentant une unité d'excitation (6) pour alimenter ledit au moins un entraînement (2) en puissance d'entraînement électrique,
**caractérisé en ce que** la commande d'entraînement (5) présente un dispositif de commutation (7) pour relier la tension d'alimentation (U_{V}) à l'unité d'excitation (6) et un dispositif de détection (8) pour détecter un déplacement non motorisé de l'élément de déplacement (1), et **en ce que** la commande d'entraînement (5), lors de la détection, au moyen du dispositif de détection (8), d'un déplacement non motorisé prédéterminé de l'élément de déplacement (1), relie la tension d'alimentation (U_{V}) dans une opération de commutation au moyen du dispositif de commutation (7) aux connexions d'alimentation (9, 10) de l'unité d'excitation (6) de sorte que le moteur d'entraînement (3) fonctionne comme un générateur pour l'alimentation (V) et est freiné en conséquence.

2. Ensemble d'entraînement selon la revendication 1, **caractérisé en ce que** la tension de générateur (U_{G}) du moteur d'entraînement (3) agit par l'intermédiaire de l'unité d'excitation (6) sur les connexions d'alimentation (9, 10) de l'unité d'excitation (6) de sorte que le moteur d'entraînement (3), lorsque la tension d'alimentation (U_{V}) est reliée, fonctionne comme un générateur pour l'alimentation (V) et est freiné en conséquence.

3. Ensemble d'entraînement selon la revendication 1 ou 2, **caractérisé en ce que** la commande d'entraînement (5), du moins en fonctionnement à l'arrêt, déconnecte la tension d'alimentation (U_{V}) de l'unité d'excitation (6) au moyen du dispositif de commutation (7).

4. Ensemble d'entraînement selon l'une quelconque des revendications précédentes, **caractérisé en ce que** la commande d'entraînement (5) présente une unité de commande (13) pour exciter l'unité d'excitation (6).

5. Ensemble d'entraînement selon l'une quelconque des revendications précédentes, **caractérisé en ce que** la commande d'entraînement (5), en particulier l'unité de commande (13), peut être amenée dans un mode de fonctionnement dans lequel l'élément de fermeture (1) peut être déplacé de manière motorisée, et dans un mode d'économie d'énergie, de sorte qu'en mode opérationnel, la tension d'alimentation (U_{V}) est reliée aux connexions d'alimentation (9, 10) de l'unité d'excitation (6) au moyen du dispositif de commutation (7) et est déconnectée de l'unité d'excitation (6) en mode d'économie d'énergie.

6. Ensemble d'entraînement selon l'une quelconque des revendications précédentes, **caractérisé en ce que** la commande d'entraînement (5) présente une protection contre l'inversion de polarité (VS) concernant la polarisation de la tension d'alimentation (U_{V}), **en ce que** le dispositif de commutation (7) fait partie de la protection contre l'inversion de polarité (VS), et **en ce que** le dispositif de commutation (7), en cas de polarisation erronée de la tension d'alimentation (U_{V}), déconnecte ou laisse déconnectée la tension d'alimentation (U_{V}) de l'unité d'excitation (6).

7. Ensemble d'entraînement selon l'une quelconque des revendications précédentes, **caractérisé en ce que** l'unité de commande (13) fait partie de la protection contre l'inversion de polarité (VS), et en cas de polarisation erronée de la tension d'alimentation (U_{V}), déconnecte ou laisse déconnectée la tension d'alimentation (U_{V}) de l'unité d'excitation (6) au moyen du dispositif de commutation (7).

8. Ensemble d'entraînement selon l'une quelconque des revendications précédentes, **caractérisé en ce que** le dispositif de commutation (7), en cas d'absence d'excitation par l'unité de commande (13), déconnecte toujours la tension d'alimentation (U_{V}) de l'unité d'excitation (6), de préférence **en ce que** l'unité de commande (13), en cas de polarisation erronée de la tension d'alimentation (U_{V}), n'effectue aucune excitation du dispositif de commutation (7), de préférence **en ce que** le dispositif de commutation (7) est mécaniquement précontraint dans une position de commutation de déconnexion.

9. Ensemble d'entraînement selon l'une quelconque des revendications précédentes, **caractérisé en ce que** le dispositif de détection (8) permet de détecter la vitesse de déplacement d'un déplacement non motorisé de l'élément de fermeture (1), et **en ce que** la commande d'entraînement (5) ne relie la tension d'alimentation (U_{V}) aux connexions d'alimentation (9, 10) de l'unité d'excitation (6) qu'en cas de dépassement d'une vitesse de déplacement de commutation.

10. Ensemble d'entraînement selon l'une quelconque des revendications précédentes, **caractérisé en ce que** la commande d'entraînement (5) est munie d'un coupe-circuit de surtension (US) pouvant être déclenché par le dépassement d'une tension d'alimentation limite (U_{V}), et **en ce que** l'agencement est en outre réalisé de telle sorte que le coupe-circuit de surtension (US) peut en outre être déclenché par un déplacement non motorisé de l'élément de déplacement (1) en cas de dépassement d'une tension de générateur limite (U_{G}), de préférence en ce que le coupe-circuit de surtension (US) à l'état déclenché couple électriquement les connexions (11, 12) du moteur d'entraînement (3) l'une à l'autre, en particulier en les court-circuitant, et freine ainsi le moteur d'entraînement (3).

11. Ensemble d'entraînement selon la revendication 10, **caractérisé en ce que** l'agencement est réalisé de telle sorte que le coupe-circuit de surtension (US) peut être déclenché par un déplacement non motorisé de l'élément de déplacement (1) uniquement dans la mesure où la vitesse de déplacement, lorsque la tension d'alimentation (U_{V}) est déconnectée, est située au-dessus d'une vitesse de déplacement limite supérieure à la vitesse de déplacement de commutation.

12. Ensemble d'entraînement selon l'une quelconque des revendications précédentes, **caractérisé en ce que** l'unité d'excitation (6) présente un circuit en pont en H (15) avec deux commutateurs côté bas (16, 17) et deux commutateurs côté haut (18, 19) pour exciter le moteur d'entraînement (3), de préférence **en ce que** le circuit en pont en H (15) présente deux demi-ponts (15a, 15b) présentant respectivement l'un des commutateurs côté bas (16, 17) et l'un commutateurs côté haut (18, 19), de plus grande préférence **en ce que** les commutateurs côté bas (16, 17) et les commutateurs côté haut (18, 19) sont configurés sous forme de MOSFET, et **en ce que** l'agencement est réalisé de telle sorte que la tension de générateur (U_{G}) agit par l'intermédiaire des diodes de corps (21) d'un commutateur côté haut (18, 19) d'un demi-pont (15a, 15b) et d'un commutateur côté bas (16, 17) de l'autre demi-pont (15a, 15b) du circuit en pont en H (15) au moins partiellement sur les connexions d'alimentation (9, 10) du circuit en pont en H (15).

13. Ensemble d'entraînement selon l'une quelconque des revendications précédentes, **caractérisé en ce que** deux entraînements (2) sont prévus, **en ce que** la commande d'entraînement (5) pour exciter les moteurs d'entraînement (3) des entraînements (2) présente respectivement une unité d'excitation (6), en particulier un circuit en pont en H (15), et **en ce que** les connexions d'alimentation (9, 10) respectivement correspondantes des unités d'excitation (6), en particulier des circuits en pont en H (15), sont interconnectées, et **en ce que** le dispositif de commutation (7) permet de relier la tension d'alimentation (U_{V}) aux connexions d'alimentation (9, 10) des deux unités d'excitation (6), en particulier des deux circuits en pont en H.

14. Ensemble d'entraînement selon l'une quelconque des revendications précédentes, **caractérisé en ce que** l'élément de déplacement (1) est configuré sous forme de hayon, de couvercle de coffre, de capot moteur, de portière, en particulier de portière latérale, ou de plancher de compartiment de chargement du véhicule automobile.

15. Agencement d'élément de déplacement d'un véhicule automobile avec un élément de déplacement (1), en particulier un hayon (1), et avec un dispositif d'entraînement destiné au déplacement motorisé de l'élément de déplacement (1) selon l'une quelconque des revendications précédentes.
